(19) Europäisches Patentamt
European Patent Office
Office européen des brevets

(11) Veröffentlichungsnummer : **0 029 145**
**B1**

(12) **EUROPÄISCHE PATENTSCHRIFT**

(45) Veröffentlichungstag der Patentschrift : **25.07.84**

(21) Anmeldenummer : **80106672.1**

(22) Anmeldetag : **30.10.80**

(51) Int. Cl.³ : **C 08 G 63/48**, C 08 G 63/66, C 08 L 67/08, C 09 D 3/00, C 09 D 3/64, C 09 D 3/68, C 08 G 63/20

# (54) Verfahren zur Herstellung von verbesserten wässrigen Emulsionen von luft- und ofentrocknenden Alkydharzen.

(30) Priorität : **19.11.79 AT 7335/79**
**29.08.80 AT 4371/80**

(43) Veröffentlichungstag der Anmeldung : **27.05.81 Patentblatt 81/21**

(45) Bekanntmachung des Hinweises auf die Patenterteilung : **25.07.84 Patentblatt 84/30**

(84) Benannte Vertragsstaaten : **BE CH DE FR GB IT LI NL SE**

(56) Entgegenhaltungen :
**BE-A- 560 432**
**GB-A- 870 412**
**GB-A- 963 969**
**GB-A- 1 156 846**
**GB-A- 1 225 702**
**US-A- 2 959 559**
**US-A- 3 457 206**
**US-A- 4 143 012**
**Die Akte enthält technische Angaben, die nach dem Eingang der Anmeldung eingereicht wurden und die nicht in dieser Patentschrift enthalten sind.**

(73) Patentinhaber : **VIANOVA KUNSTHARZ AKTIENGESELLSCHAFT**
**Postfach 191 Leechgasse 21**
**A-8011 Graz (AT)**

(72) Erfinder : **Zückert, Bertram, Dr.**
**Krottendorferstrasse 90/19**
**A-8052 Graz (AT)**

(74) Vertreter : **Pitter, Robert, Dr. et al**
**Leechgasse 21**
**A-8010 Graz (AT)**

**EP 0 029 145 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

In einer großen Anzahl von Patentschriften wird die Herstellung wasseremulgierbarer Alkydharze durch Modifizierung mit Polyäthylenglykol (PÄG) beschrieben. Bei den meisten Verfahren werden etwa 10 bis 30 % PÄG durch Um- oder Veresterung direkt in das Alkydharz eingebaut (s. unter anderem die USA-Patentschriften Nr. 2 634 245 ; 2 853 459 ; 3 133 032 ; 3 223 659 ; 3 379 548 ; 3 437 615 ; 3 437 618 ; 3 442 835 ; 3 457 206 ; 3 639 315 ; die deutsche Offenlegungsschrift 14 95 032 oder die britischen Patentschriften Nr. 1 038 696 und Nr. 1 044 821).

Der Einbau des PÄG durch Veresterung hat 2 gravierende Nachteile :

1) Die Hydroxylgruppen des PÄG können nur im gleichen Verhältnis umgesetzt werden wie die Hydroxylgruppen der anderen Polyole. Da speziell wasserverdünnbare Alkydharze immer mit hohem Hydroxylüberschuß formuliert werden, bleibt der Einbau des PÄG zwangsläufig unvollständig.

Es muß also PÄG im Überschuß eingesetzt werden, was zu geringer Härte und Wasserfestigkeit der Lackfilme führt.

2) Die verknüpfenden Esterbrücken liegen direkt neben der hydrophilen PÄG-Kette. Sie sind daher in der Emulsion dem Angriff des Wassers unmittelbar ausgesetzt. Die Lagerstabilität der Emulsionen ist daher gering.

Es hat nicht an Versuchen gefehlt, die Lagerstabilität der Emulsionen durch Einbau des PÄG nach anderen Methoden zu verbessern. Nach der AT-PS 339 450 werden wasserverdünnbare Alkydharze für ofentrocknende Lacke hergestellt, in dem das PÄG zunächst mi einem Aminformaldehydharz veräthert und anschließend durch Reaktion der überschüssigen funktionellen Gruppen mit Alkydharzvorprodukten verknüpft wird.

Gemäß EP-A-0 002 488 werden lufttrocknende Alkydharzemulsionen in einem 3-Stufenprozeß hergestellt, wobei zuerst das PÄG mit einem Überschuß an niedermolekularen Alkylphenolresolen veräthert und anschließend durch Reaktion der restlichen Methylolgruppen des Resoles an ein trocknendes Öl unter Bildung von Chromanringbindegliedern zwischen Resol und Öl gebunden wird. Das so gewonnene PÄG-modifizierte Öl dient als Ausgangsmaterial für die Herstellung der wasseremulgierbaren Alkydharze.

In beiden Fällen wird durch die mehrstufige Reaktionsführung ein nahezu vollständiger Einbau des PÄG erreicht, sodaß man mit relativ geringen Mengen auskommt. Außerdem führt der Ersatz der leicht verseifbaren Esterbindung durch die beständigere N-Methylolätherbindung bzw. durch die praktisch unverseifbare Phenolmethylolätherbindung erwartungsgemäß zu einer wesentlich verbesserten Lagerstabilität. Nach den beschriebenen Verfahren können Emulsionen mit guten lacktechnischen Eigenschaften hergestellt werden, welche unter günstigen Bedingungen, d. h. bei Temperaturen um 20 °C, ein Jahr gelagert werden können.

Trotzdem ist eine weitere Verbesserung der Stabilität erforderlich- und zwar aus folgenden Gründen :

1. Die Fließeigenschaften der Emulsionen unterliegen während der Lagerung starken Veränderungen. Frisch hergestellte Emulsionen sind stark strukturviskos und ergeben dementsprechend thixotrope Lacke mit nur geringer Tendenz zum Absetzen. Die Struktur wird aber während der Lagerung abgebaut, was sich durch einen stetigen Abfall der Viskosität bei niedrigen Scherraten bemerkbar macht. Durch diese Veränderungen ergeben sich bei gelagerten Emulsionen Probleme sowohl bei der Handhabung der Emulsionen als auch bei der Herstellung von Lacken mit gleichbleibender Qualität.

2. Die Lagerfähigkeit ist stark temperaturabhängig. Eine Temperaturerhöhung um 10 oder 20 °C führt zu einer drastischen Beschleunigung von Viskositätsabfall und Koagulation.

In warmen Ländern ist daher eine Lagerung nur in klimatisierten Hallen möglich.

3. Wenn die aus den Emulsionen hergestellten Lacke eine längere Haltbarkeit besitzen müssen, wie dies etwa bei Haushaltsfarben der Fall ist, ist ein Jahr als Gesamtlagerzeit zu wenig.

Es besteht somit ein dringender Bedarf an Alkydharzemulsionen mit guten lacktechnischen Eigenschaften, welche länger gelagert werden können und welche während der Lagerung keine wesentliche Veränderung ihres Fließverhaltens erfahren.

Es ist anzunehmen, daß die noch immer mangelhafte Lagerstabilität der nach der EP-A-0 002 488 und der AT-PS 339 450 hergestellten Emulsionen darauf zurückzuführen ist, daß die endständigen Carboxylgruppen durch Hydrolyse abgespalten werden. Die Carboxylgruppen werden durch teilweise Veresterung von aromatischen oder aliphatischen Di- bzw. Tricarbonsäuren, z. B. o-Phthalsäure, Tetrahydrophthalsäure oder Trimellithsäure eingeführt. Sie bewirken nach Neutralisation die für die Stabilisierung notwendige negative Aufladung der Emulsionströpfchen. In dem Maße, wie sie abgespalten werden, wird die Emulsion grobteiliger und dünnflüssiger und koaguliert schließlich.

Aus der Literatur ist bekannt, daß die Verseifungsbeständigkeit von sauren Teilesterbindungen mit dem Abstand bzw. mit der Anzahl der C-Atome zwischen Ester- und Carboxylgruppe zunimmt. Eine Verbesserung ist daher zu erwarten, wenn zwischen Esterbindung und Carboxylgruppe mehr als 2 (wie bei Phthalsäure) bzw. 3 C-Atome (wie bei Trimellithsäure) liegen.

Es ist daher versucht worden, stabilere Emulsionen dadurch zu erhalten, daß zur Einführung der Carboxylgruppen Additionsverbindungen von Acryl- bzw. Methacrylsäure an ungesättigte Fettsäuren verwendet werden. Nach der DE-OS 24 16 658 werden durch Reaktion von Acrylsäure oder Methacrylsäure mit konjugiert ungesättigten Fettsäuren bei 250-300 °C Addukte hergestellt, die anschließend nach den bekannten Verfahren durch Veresterung zu PÄG-modifizierten, wasseremulgierbaren Alkydharzen verarbeitet werden.

Die Nachteile dieses Verfahrens liegen darin, daß das PÄG durch Veresterung eingebaut und dementsprechend leicht wieder abgespalten wird. Um eine ausreichende Emulsionsstabilität zu erreichen, muß daher viel PÄG (5-15 %, in den Beispielen 8,5-9,5 %) eingesetzt werden.

Außerdem entstehen unter den angegebenen Bedingungen Addukte mit maximal 15 % Acrylsäure, während 17-47 % der eingesetzten Acryl- bzw. Methacrylsäure ungebunden bleiben und durch Destillation entfernt werden müssen. Stellt man in Rechnung, daß für eine ausreichende Stabilisierung der Emulsion eine Säurezahl von ca. 20 mg KOH/g erforderlich ist, müssen zur Adduktbildung der dafür notwendigen 2,58 % Acrylsäure mindestens 14,6 % Fettsäuren (bezogen auf das Alkyldharz) aufgewendet werden. Da wasserverdünnbare lufttrocknende Alkydharze in der Regel einen Fettsäuregehalt von 30-40 % aufweisen, ist das etwa die Hälfte der insgesamt vorhandenen Fettsäure. Dieser Fettsäureanteil muß als für die Filmvernetzung verloren betrachtet werden, da bei der hohen Reaktionstemperatur bei der Herstellung des Vorproduktes die Doppelbindungen, die nicht durch Adduktbildung blockiert werden, durch Dimerisierung verloren gehen. Daraus erklärt sich die relativ schwache Trocknung der nach DE-OS 24 16 658 hergestellten Produkte.

Aus der DE-OS 28 09 840 sind « Wasserdispergierbare, epoximodifizierte Alkydharze » bereits bekannt. Nach der Art der Epoxidverbindungen (aromatische Verbindungen mit mindestens 2 Epoxidgruppen pro Molekül) und der Herstellungsmethode (Einbau des PÄG durch direkte Veresterung) trifft diese Patentschrift nicht den Gegenstand der vorliegenden Erfindung.

Der Technik stehen somit zur Zeit keine Produkte zur Verfügung, welche in den wichtigsten Eigenschaften, d. h. sowohl bezüglich Lagerstabilität als auch hinsichtlich Trocknungsgeschwindigkeit, voll befriedigen. Außerdem wird die Einsatzmöglichkeit der nach EP-A-0 002 488 hergestellten Produkte durch den Gehalt an Phenolresolen und stark ungesättigten Ölen eingeschränkt. Die Produkte sind dunkel gefärbt und zeigen starke Gilbung. Helle Decklacke können daher nicht hergestellt werden — der Einsatz beschränkt sich auf Grundierungen, Füller und bunte Industrielacke.

Es wurde nun gefunden, daß man universell einsetzbare wasseremulgierbare Alkyldharze mit ausgezeichneten all-round-Eigenschaften erhält, wenn man einerseits das PÄG in Form von speziellen Verätherungsprodukten und andererseits die Carboxylgruppen in Form von sauren Copolymerisaten in das Alkydharz einführst.

Die vorliegende Erfindung betrifft demgemäß ein Verfahren zur Herstellung verbesserter wäßriger Emulsionen für luft- und ofentrocknende Lacke auf der Basis von polyäthylenglykolmodifizierten Alkydharzen, welches dadurch gekennzeichnet ist, daß man

(a) Fettsäureester, deren gesättigte oder ungesättigte Fettsäurereste mehr als 10 C-Atome und ätherartig gebundene Polyäthylenglykolreste mit einem mittleren Molekulargewicht zwischen 500 und 5 000 aufweisen, wobei die verbleibende Hydroxylgruppe des Polyäthylenglykolrestes gegebenenfalls mit einem weiteren gesättigten Fettsäureester oder einem niedrigen Monoalkohol veräthert ist, in einer weiteren Verfahrensstufe

(b) unter Umesterung in üblicher Weise zu einem Alkyldharzvorprodukt mit einer Säurezahl unter 15, vorzugsweise unter 5 mg KOH/g, einer Hydroxylzahl zwischen 50 und 250 mg KOH/g und einem PÄG-Anteil von 3,3 bis 15 Gew.-% reagiert,

(c) 50 bis 90 Gew-% dieses Alkydharzvorproduktes bei 170 bis 200 °C mit 10 bis 50 Gew.-% eines Copolymerisats aus

6-40 Gew.-% Methacrylsäure
20-55 Gew.-% einer ungesättigten Ölfettsäure mit einer Jodzahl von mind. 125 und
20-70 Gew.-% einer oder mehrerer Vinyl- und/oder Vinylidenverbindungen, welche neben der Doppelbindung keine weiteren reaktionsfähigen Grupper tragen bis zu einer Säurezahl von 10 bis 35, vorzugsweise 12 bis 25 mg KOH/g und einer Grenzviskositätszahl (Chloroform, 20 °C) von 6 bis 15 ml/g, bei einem PÄG-Anteil von 3-8 % verestert und

(d) das so modifizierte Alkydharz unter Neutralisation der Carboxylgruppen mit Ammoniak oder Aminen und unter Zusatz von maximal 20 Gew.-% an organischen Hilfslösungsmittel in Wasser emulgiert.

Nach dem erfindungsgemäßen Verfahren lassen sich Alkyldharzemulsionen herstellen, welche als Basis für hochwertige luft- und ofentrocknende Lacke geeignet sind. Sie zeichnen sich insbesonders durch gute Langzeitstabilität auch bei Temperaturen aus, wie sie in Gebieten außerhalb der gemäßigten Klimazonen anzutreffen sind. Daneben lassen sie auch bezüglich der Trocknungsfähigkeit sowie der Filmeigenschaften keine Wünsche offen.

Diese guten Eigenschaften der erfindungsgemäßen Emulsionen sind das Ergebnis eines gezielten Molekülaufbaues, wobei wesentliches Augenmerk auf einen möglichst hydrolysefesten Einbau der stabilisierenden hydrophilen Gruppen gelegt wurde.

Die Komponente (a) kann in verschiedener Weise aufgebaut werden :

(a1) 1 Mol eines Polyäthylenglykols mit einem mittleren Molekulargewicht zwischen 500 und 5 000

wird bei 100 bis 150 °C in Gegenwart eines Katalysators mit 1,7 bis 2,1 Mol einer 1,2-Epoxidverbindung der allgemeinen Formel

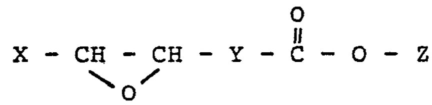

wobei
X einen Alkylrest mit 2 bis 8 C-Atomen,
Y einen Alkylenrest mit 7 bis 11 C-Atomen und
Z einen gesättigten, aliphatischen, cycloaliphatischen oder einen aromatischen Kohlenwasserstoffrest mit 1-10 C-Atomen bedeutet, bis zu einer Epoxidzahl unter 0,02, vorzugsweise unter 0,01 umgesetzt.

Verbindungen der obengenannten allgemeinen Formel werden durch Epoxidierung von Estern einwertiger Alkohole mit einfach ungesättigten Fettsäuren gewonnen. Als solche kommen beispielsweise Lauroleinsäure, Myristoleinsäure, Palmitoleinsäure, Ölsäure oder Erucasäure in Frage. Besonders geeignet sind Epoxidierungsprodukte von Estern der Ölsäure. Als Alkoholkomponente kommen einwertige gesättigte, aliphatische, cycloaliphatische und aromatische Alkohole mit 1-10 C-Atomen in Betracht.

Die Epoxidierung wird nach den bekannten Verfahren, z. B. mit Wasserstoffperoxid und Ameisensäure, durchgeführt. Das Produkt gemäß der allgemeinen Formel enthält eine 1,2-Epoxidgruppe pro Molekül und muß zu mindestens 75 % in der technischen Mischung enthalten sein. Produkte dieser Art sind auch im Handel erhältlich und werden in den entsprechenden Merkblättern als n-Alkyd- oder i-Alkylepoxifettsäureester definiert.

Als Polyäthylenglykole sind Produkte mit einem mittleren Molgewicht von 500-5 000 geeignet. Sie werden in Gegenwart von Katalysatoren im Molverhältnis von 1 : 1,7-1 : 2,1 mit der Epoxidverbindung unter Verätherung umgesetzt. Dabei wird das PÄG-Molekül im Idealfall beidseitig über Ätherbindungen an einen Fettsäureester gebunden. Technisch wird das PÄG nach Entwässerung durch Vakuumdestillation mit einem Schleppmittel mit dem Katalysator versetzt und auf 100-150 °C erwärmt. Dann wird im Verlauf von mehreren Stunden die Epoxidverbindung zugegeben und die Temperatur so lange gehalten, bis die Epoxidzahl unter 0,02, vorzugsweise unter 0,01 gefallen ist. Als Katalysatoren sind u. a. Schwefelsäure, Perchlorsäure, Aluminiumchlorid und Bortriffluorid bzw. dessen Ätherate geeignet.

Das so erhaltene Verätherungsprodukt (Polyäthylenglykoldiäther) wird dann durch Umesterung unter Abspaltung der einwertigen Alkohole aus der ursprünglich eingesetzten Monoepoxidverbindung mit den bei der Alkyldharzherstellung üblichen Polyolen, Fettsäuren und/oder Ölen sowie gegebenenfalls aromatischen Monocarbonsäuren und/oder einem Teil der vorgesehenen Dicarbonsäuren in Gegenwart geeigneter Katalysatoren wie Bleiglätte oder Calciumhydroxid bei etwa 250 °C umgesetzt. Der aus dem Vorprodukt freigesetzte einwertige Alkohol wird quantitativ durch Destillation entfernt. Anschließend werden die restlichen Dicarbonsäuren gegebenenfalls zusammen mit weiterem Polyol und/oder Fettsäuren zugestzt und so lange in bekannter Weise verestert, bis die Säurezahl des so hergestellten Alkydharzvorproduktes unter 15, bevorzugt unter 5 liegt und eine Grenzviskositätszahl von 4 bis 10 ml/g (Chloroform, 20 °C) erreicht ist. Die Rohstoffe für die Alkydharzvorprodukte sind dem Fachmann bekannt, sodaß eine detaillierte Aufzählung nicht notwendig scheint.

Es kann auch so vorgegangen werden, daß zuerst alle Komponenten bis auf den PÄG-modifizierten Fettsäureester zu einem Alkydharz mit einer Säurezahl unter 15 verarbeitet werden und anschließend der Polyäthylenglykol-diäther in dieses Alkhydharz unter Umesterung eingebaut wird. Anstelle des Alkydharzes können auch Fettsäureester von Epoxidharzen von Bisphenol-A-Typ oder Fettsäureester von Styrol-Allylalkohol-Copolymerisaten eingesetzt werden.

Die Alkyldharzvorprodukte sollen vorzugsweise so formuliert werden, daß der Fettsäuregehalt einschließlich der aus der Epoxidverbindung stammenden Fettsäure zwischen 1 und 60 % und die Hydroxylzahl zwischen 50 und 250 mg KOH/g liegt. Der PÄG-Gehalt der Produkte liegt zwischen 3,3 und 15 %. Anstelle einheitlicher Alkydharzvorprodukte können auch Mischungen eingesetzt werden, wobei auch eine Komponente PÄG-frei sein kann.

Im Endprodukt liegen zwischen den hydrophilen PÄG-Ketten und den Esterbindungen Alkylketten mit mindestens 7 C-Atomen. Eine Abspaltung des PÄG durch Hydrolyse ist daher wesentlich erschwert. Eine Teilnahme der bei der Verätherungsreaktion zwischen dem PÄG und der Epoxidverbindung gebildeten sekundären Hydroxylgruppen an dem Um- und Veresterungsreaktionen bei der Herstellung des Alkydharzvorproduktes ist bei dem üblichen Überschuß an primären Hydroxylgruppen infolge sterischer Hinderung weitgehend auszuschließen.

(a2) Eine andere Art der Komponente (a) wird durch Umsetzung eines epoxidierten Glyceridöls, das einen Epoxidsauerstoffgehalt von 4 bis 9 % aufweist, mit 0,8 bis 0,95 Mol eines Monoalkoxipolyäthylenglykols pro Oxirangruppe des epoxidierten Öls erhalten, wobei der Polyglykolrest vorteilhafterweise ein mittleres Molekulargewicht zwischen 500 und 3 000 aufweist.

Die erfindungsgemäß eingesetzten epoxidierten Glyceridöle sind handelsübliche Produkte, welche durch Epoxidierung von trocknenden Ölen mit Jodzahlen von 100 bis 180, insbesondere von Sojaöl mittels Persäuren erhalten werden. Andere epoxidierte Öle leiten sich vom Leinöl, Sonnenblumenöl, Baumwollsamenöl u. ä. ab. Der Epoxidsauerstoffgehalt solcher epoxidierter Öle liegt zwischen 4 und 9 %.

Als Monoalkoxipolyäthylenglykole (APG) werden Produkte mit einem mittleren Molekulargewicht von 500 bis 3 000 eingesetzt. Die Alkoxigruppe soll 1 bis 4 Kohlenstoffatome aufweisen. Um das APG möglichst quantitativ zu binden, wird erfindungsgemäß mit einem geringen Überschuß an Epoxidgruppen gearbeitet. Für die vorliegende Erfindung hat sich ein Verhältnis von 0,8 bis 0,95 Mol APG pro Oxirangruppe als günstig erwiesen. Infolge der höheren Funktionalität der epoxidierten Öle hat es sich als zweckmäßig erwiesen, in diesem Falle nicht mit Polyäthylenglykolen sondern mit APG zu arbeiten. Die Umsetzung erfolgt analog der auf Seite 7 angegebenen Methode. Die Reaktion wird frühestens dann beendet, wenn sich aufgrund der Epoxidzahl ein Umsatz der Hydroxylgruppen des APG von mindestens 95 % ergibt. Dabei wird angenommen, daß die bei der Öffnung des Oxiranringes entstehenden sekundären Hydroxylgruppen infolge der sterischen Verhältnisse praktisch nicht reagieren.

Die weitere Verarbeitung der APG-Äther erfolgt analog der für die PÄG-Äther angegebenen Methode. Der vollständige Einbau der APG-Ather ist nach einer Reaktionszeit von 90 Minuten unter Einhaltung einer Reaktionstemperatur von 240-250 °C in allen Fällen gewährleistet. Auch die Menge des APGÄthers wird so gewählt, daß der Polyäthylenglykolgehalt einem Anteil von 3,3 bis 15 % des Alkydharzvorproduktes entspricht.

Gegenüber den Möglichkeiten der Komponente (a1) wird durch diese Variante die Basis der einsetzbaren handelsüblichen und preiswerten Rohstoffe wesentlich verbreitert, ohne daß ein negativer Einfluß auf die Stabilität der Endprodukte festgestellt werden kann.

Zur Einführung der zur Stabilisierung der Emulsionen notwendigen Carboxylgruppen werden gemäß der vorliegenden Erfindung Polymerisate herangezogen, welche durch radikalische Polymerisation von

6-40 Gew.-% Methacrylsäure,
20-55 Gew.-% einer trocknenden Ölfettsäure mit einer Jodzahl von mindestens 125 und
20-70 Gew.-% einer oder mehrerer Vinyl- und/oder Vinylidenverbindungen insbesonders Acrylverbindungen, welche außer der Doppelbindung keine reaktionsfähigen Gruppen enthalten

hergestellt werden.

Als trocknende Fettsäuren für die Herstellung dieser Zwischenprodukte werden solche mit konjugierten Doppelbindungen — wie Rizinenfettsäuren oder isomerisierte Fettsäuren — oder solche mit isolierten Doppelbindungen — wie techn. Soja-, Safflor- oder Leinölfettsäure, eingesetzt. Isoliert ungesättigte Fettsäuren müssen aufgrund ihrer geringeren Reaktionsfähigkeit in größerem Überschuß eingesetzt werden. Soferne die Fettsäure bei der Polymerisation nicht vollständig reagiert, wird der Rest bei der Veresterung mit dem Alkydharzvorprodukt eingebaut. Ein möglichst hoher Polymerisationsumsatz ist jedoch anzustreben.

Als Vinyl- bzw. Vinylidenverbindungen können Styrol, Vinyltoluol, Vinylester der Essigsäure, der Propionsaure oder der Versaticsäure verwendet werden. Bevorzugt werden die handelsüblichen Alkylester der Acryl- und Methacrylsäure eingesetzt. Die Auswahl richtet sich unter anderem nach der Verträglichkeit mit dem Alkydharzvorprodukt. In der Regel besitzen die Polymerisate mit der besten Verträglichkeit auch die beste Emulgatorwirkung.

Die Polymerisation wird in Lösung bei 80-140, vorzugsweise 90-110 °C durchgeführt. Als Initiatoren kommen alle Radikalbildner, welche in diesem Temperaturbereich zerfallen, in Frage. Besonders geeignet ist Di-Benzoylperoxid. Zur Begrenzung des Molekulargewichtes werden die üblichen Polymerisationsregler — wie tert. Dodecylmerkaptan — verwendet.

Als Endpunkt der Polymerisation wird das Konstantwerden des Trockenrückstandes, d. h. das weitgehende Verschwinden der flüchtigen Monomeren aus dem Reaktionsgemisch angenommen.

Unter den angegebenen Bedingungen werden Nebenreaktionen, wie die Fettsäuredimerisierung, weitgehend unterdrückt. Daher bleiben die nicht einpolymerisierten Fettsäuren unverändert und behalten nach Einbau in das Alkydharzvorprodukt ihre Fähigkeitzur oxidativen Vernetzung.

Die Carboxylgruppen der Methacrylsäure besitzen nach der Polymerisation tertiäre Konfiguration und entsprechend geringe Reaktionsfähigkeit. Sie bleiben daher bei der Reaktion zwischen Alkyd- und Polymerisatharz im wesentlichen unverestert und dienen nach Neutralisation zur Stabilisierung der Emulsion. Die primären Carboxylgruppen der Fettsäuren reagireen dagegen mit den Hydroxylgruppen des Alkydharvorproduktes und bewirken dadurch die Verknüpfung beider Komponenten. Im Endprodukt liegen dann zwischen den stabilisierenden Carboxylatgruppen und den Esterbrücken die langen, hydrophoben Alkylketten der Fettsäuren, sodaß eine hydrolytische Spaltung sehr erschwert wird.

Der Einbau der Vinylverbindungen und Acrylester dient zur Steuerung von Verträglichkeitsbereich und amphipathischem Charakter des Polymerisates. Damit wird einerseits ein leichterer Einbau des Polymerisates durch Regulierung der Verträglichkeit mit der Alkydkomponente, andererseits eine Emulgatorwirkung auch für den Fall, daß das Polymerisat nicht vollständig eingebaut bzw. nachträglich wieder abgespalten wird, erreicht.

Alkydharzvorprodukt und Polymerisat werden so kombiniert, daß nach vollständiger Veresterung der Fettsäurecarboxylgruppen aus dem Polymerisat bei 170-200 °C eine Säurezahl von 10-35, bevorzugt 12-25 und eine Grenzviskositätszahl von 6-15 ml/g (Chloroform, 20 °C) resultiert. Der PÄG-Gehalt der Endprodukte beträgt vorzugsweise 3-8 %.

Die Harze werden mit maximal 20 % — bevorzugt 5-15 % — organischen Hilfsmitteln angelöst und in Wasser, welches zur 50-100 %igen Neutralisation der Säuregruppen des Harzes die entsprechende Menge an Ammoniak oder organischen Aminen enthält, bei Temperaturen zwischen 40 und 80 °C emulgiert. Als Hilfslösungsmittel sind vor allem Alkohole oder Ätheralkohole, wie n-Butanol oder Äthylenglykolmonobutyläther, geeignet. Als Amine werden z. B. Triäthylamin oder Dimethyläthanolamin verwendet.

Die nach dem erfindungsgemäßen Verfahren hergestellten Emulsionen dienen, wie in den Beispielen gezeigt wird, als Basis für luft- und ofentrocknende wasserverdünnbare Lacke, welche nach allen üblichen Verfahren aufgebracht werden können. Bei der Herstellung von ofentrocknenden Lacken werden zusätzlich wasserverträgliche Aminoformaldehydharze als vernetzende Komponente zugegeben.

Die folgenden Beispiele erläutern das erfindungsgemäße Verfahren. Alle angegebenen Teile oder Prozente sind Gewichtsteile bzw. Gewichtsprozente, soferne nicht anders angegeben. Die angegebenen — Grenzviskositätszahlen wurden in Chloroform bei 20 °C bestimmt.

I) Herstellung der Polyäthylenglykol-diäther (Komponente a1)

Gemäß der in Tabelle 1 gegebenen Zusammensetzung werden Polyäthylenglykol-diäther (PGDÄ) in folgender Weise hergestellt :

Das Polyäthylenglykol wird zur Entfernung von Wasser unter Zusatz von 10 % Toluol auf 120 °C erwärmt und solange bei dieser Temperatur unter Vakuum gehalten, bis kein Destillat mehr übergeht. Dann wird die Temperatur auf 110 °C gesenkt und der $BF_3$-Komplex zugegeben. Anschließend wird Epoxidfettsäureester im Verlauf von 5 Stunden gleichmäßig zugegeben und die Temperatur weiter auf 110 °C gehalten, bis die Epoxidzahl unter 0,01 gesunken ist.

Tabelle 1

| PDGÄ | 1 | 2 | 3 |
|---|---|---|---|
| PÄG 1500 | 750 | — | — |
| PÄG 3000 | — | 1 500 | 750 |
| PÄG 600 | — | — | 150 |
| $BF_3$-Diäthylätherkomplex | 5 | 8,3 | 5,7 |
| EPF 1 | 380 | — | 400 |
| EPF 2 | — | 350 | — |

PÄG : Polyäthylenglykol (der Zahlenwert gibt das mittlere Molekulargewicht des verwendeten Glykols an)

EPF 1 : ist laut Merkblattangabe des Erzeugers ein n-Alkylepoxistearat mit einem Molekulargewicht von 377 und einem Gehalt an Epoxidsauerstoff von 4,5 %.

EPF 2 : ist laut Merkblattangabe des Erzeugers ein i-Alkylepoxistearat mit einem Molekulargewicht von 380 und einem Epoxidsauerstoffgehalt von 4,5 %.

II) Herstellung der APG-Äther (APGÄ) (Komponente a2)

Gemäß der in Tabelle 2 gegebenen Zusammensetzung werden die APGÄ in folgender Weise hergestellt :

Das APG wird zur Entfernung von Wasser unter Zusatzt von 10 % Toluol auf 120 °C erwärmt und solange bei dieser Temperatur unter Vakuum gehalten, bis kein Destillat mehr übergeht. Dann wird die Temperatur auf 110 °C gesenkt und der $BF_3$-Komplex zugegeben. Anschließend wird das epoxidierte Glyceridöl im Verlauf von 5 Stunden gleichmäßig zugegeben und die Temperatur weiter auf 110 °C gehalten, bis sich aufgrund der Epoxidzahl ein mindestens 95 %iger Umsatz der Hydroxylgruppen des APG ergibt.

Tabelle 2

| APGÄ | 1 | 2 |
|---|---|---|
| MPG 1100 | 1 000 | — |
| MPG 2400 | — | 2 200 |
| $BF_3$-Diäthylätherkomplex | 5,5 | 11,0 |
| EO 1 | 188 | — |
| EO 2 | — | 267 |

MPG : Methoxipolyäthylenglykol (der Zahlenwert gibt das mittlere Molekulargewicht an)
EO 1 : ist laut Merkblattangabe des Erzeugers ein epoxidiertes Leinöl mit einem Epoxidsauerstoffgehalt von 8,5 %, entsprechend einem Epoxidäquivalent von 188
EO 2 : ist laut Merkblattangabe des Erzeugers ein epoxidiertes Sojaöl mit einem Epoxidsauerstoffgehalt von 6 %, entsprechend einem Epoxidäquivalent von 267

III) Herstellung der Alkydharzvorprodukte

Die Kennzahlen der Alkhydharzvorprodukte sind in Tabelle 3 zusammengefaßt.

Alkydharzvorprodukt A1 : 110 g Pentaerythrit, 50 g PGDÄ 1, 120 g pt-Butylbenzoesäure, 60 g Phthalsäureanhydrid, 20 g Leinölfettsäure, 0,8 g Zinkoktoat (8 % Zink) und 0,8 g Calziumoktoat (4 % Calzium) werden in 4 Stunden auf 250 °C erhitzt und eine Stunde bei dieser Temperatur gehalten. Dabei destillieren neben dem Veresterungswasser 5 g einer wasserunlöslichen Flüssigkeit über. Das gesamte Destillat wird abgelassen und verworfen. Dann wird die Temperatur auf 200 °C gesenkt. Es werden 70 g Rizinenfettsäure und 36 g Phthalsäureanhydrid zugegeben. Nun wird wieder auf 200 °C erhitzt und unter Azeotropkreislauf mit Xylol bis zu einer Säurezahl unter 3 verstert. Das Harz wird unverdünnt abgefüllt.

Alkyldharzvorprodukt A2 : 165 g Holzöl, 45 g Leinölfettsäure, 97 g PGDÄ 2, 185 g Pentaerythrit, 155 g para-tert.-Butylbenzoesäure, 0,8 g Zinkoktoat (8 % Zink) und 1,6 g Calziumoktoat (4 % Calzium) werden in 4 Stunden auf 250 °C erhitzt und 60 Minuten bei dieser Temperatur gehalten, wobei 6 g eines wasserunlöslichen Destillates abgetrennt werden. Dann wird auf 150 °C gekühlt und es werden 130 g Hexachloroendomethylentetrahydrophthalsäure, 80 g Tetrahydrophthalsäureanhydrid und 0,6 g Triphenylphosphit 50 %ig in Xylol zugesetzt. Schließlich wird bei 190 °C unter Azeotropkreislauf mit Xylol bis zu einer Säurezahl unter 5 mg KOH/g verestert.

Alkydharzvorprodukt A3 : (PÄG-freies Alkydharz) : 85 g Holzöl, 80 g para-tert.-Butylbenzoesäure, 95 g Pentaerythrit, 30 g Benzoesäure und 25 g Tallölfettsäure werden 2 Stunden bei 230 °C vorverestert bzw. umgeestert. Die Temperatur wird auf 200 °C gesenkt und es werden 80 g Phthalsäureanhydrid und 15 g eines Phenolresoles aus 1 Mol para-tert.-Butylphenol und 2 Mol Formaldehyd zugefügt. Anschließend bei 190 °C unter Azeotropkreislauf zu Ende verestert.

Alkydharzvorprodukt A4 : Ausgehend vom Ansatz des Alkydharzvorproduktes A1 wird ein Alkhydharz mit einem höheren Fettsäuregehalt hergestellt, in dem 120 g para-tert.-Butylbenzoesäure durch 40 g para-tert.-Butylbenzoesäure und 130 g Tallölfettsäure ersetzt werden. Die Herstellungsmethode bleibt unverändert.

Alkydharzvorprodukt A5 : 285 g Trimethylolpropan, 55 g Pentaerythrit, 105 g PGDÄ 3, 120 g Kokosfettsäure, 240 g Phthalsäureanhydrid, 55 g Adipinsäure, 27 g Benzoesäure und 1,8 g Calziumoktoat (4 % Calzium) werden in 3 Stunden auf 240 °C erhitzt und 60 Minuten bei dieser Temperatur gehalten. Während dieser Zeit werden ca. 8 g eines wasserunlöslichen Destillates abgetrennt. Dann wird unter Azeotropkreislauf bis zu einer Säurezahl unter 2 mg KOH/g verestert.

Alkydharzvorprodukt A6 : Das Alkydharzvorprodukt A6 ist ein Veresterungsprodukt eines Styrol-Allylalkohol-Copolymeren mit einem Hydroxylgehalt von 7,7 %. 120 g Copolymeres werden mit 20 g PGDÄ 1-0,3 g Calziumoktoat (4 % Calzium) und 0,3 g Zinkoktoat (8 % Zink) in 3 Stunden auf 250 °C erhitzt und eine Stunde bei dieser Temperatur gehalten. Dabei entstehen 2 g eines wasserunlöslichen Destillates.
Dann werden 40 g Tallölfettsäure und 13 g para-tert. Butylbenzoesäure zugegeben und bei 220 °C unter Azeotropkreislauf mit Xylol bis zu einer Säurezahl unter 2 mg KOH/g verestert.

Alkydharzvorprodukt A7 : (Das Alkydharzvorprodukt A7 ist ein modifizierter Epoxidharzester, wobei als Epoxidharz ein Diepoxid auf Basis von Bisphenol A mit einem Epoxidäquivalentgewicht von 750-820 eingesetzt wird) :
Eine Mischung aus 40 g Tallölfettsäure, 13 g para-tert.-Butylbenzoesäure und 0,2 g Triäthylamin wird auf 150 °C erhitzt. Dann werden 120 g des obengenannten Epoxidharzes in kleinen Anteilen im Verlauf von einer Stunde zugegeben. Die Temperatur wird auf 180 °C gesteigert und es werden 0,3 g Calziumoaktoat (4 % Calzium), 0,3 g Zinkoktoat (8 % Zink) und 20 g PGDÄ 1 zugeführt. Dann wird die Temperatur im Verlauf von 2 Stunden auf 250 °C erhöht und 60 Minuten bei diesem Wert gehalten, wobei 2 g eines wasserunlöslichen Destillates abgetrennt werden.
Anschließend wird das Harz bei 220 °C unter Azeotropkreislauf mit Xylol bis zu einer Säurezahl unter 2 mg KOH/g verestert.

Alkydharzvorprodukt A11 : Das Harz entspricht dem Alkydharzvorprodukt A2, wobei jedoch die dort

eingesetzten 97 g PGDÄ 2 durch 94 g APGÄ 1 ersetzt wurden. Die Umesterungsphase bei 250 °C wurde auf 120 Minuten verlängert.

Alkydharzvorprodukt A12 : Das Harz entspricht dem Alkydharzvorprodukt A5, wobei jedoch die dort eingesetzten 105 g PGDÄ 3 durch 91 g APGÄ 2 ersetzt wurden. Die Umesterungsphase bei 240 °C wurde auf 120 Minuten verlängert.

Tabelle 3

| | Festkörpergehalt % | Fettsäuregehalt % | Säurezahl mg KOH/g | Hydroxylzahl mg KOH/g | Grenzviskositätszahl ml/g |
|---|---|---|---|---|---|
| A 1 | 94 | 23,5 | 2,3 | 126 | 7,2 |
| A 2 | 94,3 | 27 | 4,7 | 189 | 8,2 |
| A 3 | 93,5 | 30 | 4,3 | 136 | 6,5 |
| A 4 | 95,2 | 44 | 2,9 | 105 | 6,8 |
| A 5 | 96,4 | 17 | 0,7 | 224 | 7,3 |
| A 6 | 95,1 | 24 | 1,7 | 96 | 7,0 |
| A 7 | 95,6 | 23,6 | 1,8 | 125 | 9,7 |
| A 11 | 94,2 | 27 | 2,9 | 195 | 7,9 |
| A 12 | 96 | 15,8 | 1,6 | 231 | 7,6 |

IV) Herstellung der Polymerisate :

Die Zusammensetzung und die Kennzahlen der Polymerisate P1 bis P5 sind in Tabelle 4 zusammengefaßt.

Tabelle 4

| | P 1 | P 2 | P 3 | P 4 | P 5 |
|---|---|---|---|---|---|
| Teil 1 : | | | | | |
| Leinölfettsäure | 60 | 60 | — | — | 50 |
| Isobutylmethacrylat | 8 | — | — | — | — |
| Vinyltoluol | 6 | 14 | — | — | — |
| Methacrylsäure | 6 | 6 | — | — | — |
| Dibenzoylperoxid (50 %) | 3 | 3 | — | — | — |
| Dodecylmerkaptan | 0,2 | 0,2 | — | — | — |
| Xylol | 45 | 45 | 45 | 45 | 90 |
| Isopropanol | 45 | 45 | 45 | 45 | — |
| Teil 2 : | | | | | |
| Isobutylmethacrylat | 32 | — | 40 | 30 | — |
| n-Butylacrylat | — | — | — | — | 20 |
| Vinyltoluol | 24 | 56 | 30 | 30 | 65 |
| Methacrylsäure | 24 | 24 | 30 | 40 | 15 |
| Dodecylmerkaptan | 0,8 | 0,8 | 1 | 1 | 1 |
| Teil 3 : | | | | | |
| Leinölfettsäure | 40 | 40 | — | — | — |
| Rizinenfettsäure | — | — | 40 | 40 | 20 |
| Xylol | 5 | 5 | 5 | 5 | 16 |
| Isopropanol | 5 | 5 | 5 | 5 | — |
| Dibenzoylperoxid | 11 | 11 | 10 | 10 | 14 |

(Fortsetzung)

| | P 1 | P 2 | P 3 | P 4 | P 5 |
|---|---|---|---|---|---|
| Summe | 315 | 315 | 251 | 251 | 291 |
| Konstanten : | | | | | |
| Fettsäuregehalt % | 50 | 50 | 28,5 | 28,5 | 41 |
| Methacrylsäuregehalt % | 15 | 15 | 21,5 | 28,5 | 8,8 |
| Trockenrückstand % | 65 | 65 | 60 | 60 | 60 |
| Säurezahl mg KOH/g | 186 | 189 | 194 | 222 | 133 |
| Grenzviskositätszahl Dimethylformamid, 20 °C, ml/g | 5,2 | 5,1 | 8,6 | 8,9 | 6,7 |

Teil 1 wird im Reaktionsgefäß vorgelegt und bei P 1, P 2, P 3 und P 4 bis zum Sieden (~ 90 °C), bei P 5 bis auf 110 °C erhitzt. Dann werden bei gleichbleibender Temperatur die Teile 2 und 3 gleichzeitig und gleichmäßig in einem Zeitraum von 5 Stunden zugegeben. Die Temperatur wird dann solange gehalten, bis die Bestimmung des Trockenrückstandes die vollständige Polymerisation der flüchtigen Monomeren anzeigt.

Beispiele 1-9

Die Alkydharzvorprodukte werden mit den Polymerisaten in den in Tabelle 5 angegebenen Verhältnissen gemischt und auf 180 °C erwärmt. Dabei werden die Lösungsmittel, zum Schluß unter Vakuum, vollständig abdestilliert. Dann wird bei 180-200 °C verestert, bis Säurezahl und Grenzviskositätszahl bei den in Tabelle 5 angegebenen Werten liegen.

Zur Beschleunigung der Veresterung können geringe Mengen Xylol als azeotropes Schleppmittel zugesetzt werden. Sie müssen am Ende der Reaktion jedoch wieder durch Vakuum-Destillation entfernt werden. Zur Erleichterung der Emulgierung werden die Harze in Äthylenglykolmonobutyläther angelöst (Trockenrückstand siehe Tabelle 5).

Die Harze werden unter Zusatz einer 4 : 1 Mischung aus Triäthylamin und Dimethyläthanolamin bei 50-70 °C in Wasser emulgiert. Die zugesetzten Mengen Amin und Wasser werden so gewählt, daß der pH-Wert der Emulsionen zwischen 8,0 und 9,5 und die Viskosität, gemessen bei 20 °C mit dem Brookfield-Rotationsviskosimeter RVF, Spindel 7, 4 Umdrehungen pro Minute, etwa zwischen 100 und 200 Pa.s liegen.

Die Zahlen für die Zusammensetzung beziehen sich auf 100 %ige Harze.

Das Beispiel 8 entspricht bezüglich der Herstellung des modifizierten Alkydharzes und der Emulsion dem Beispiel 2. Ebenso entspricht das Beispiel 9 dem Beispiel 4. In den genannten Fällen ist jedoch die Komponente (a1) gegen eine solche des Typs (a2) ausgetauscht.

Tabelle 5 : Zusammensetzung und Konstanten der erfindungsgemäß modifizierten Alkydharze.
(Die Zahlen für die Zusammensetzung beziehen sich auf 100 %ige Harze)

| Beispiel | 1 | 2 | 3 | 4 | 5 | 6 | 7 | 8 | 9 |
|---|---|---|---|---|---|---|---|---|---|
| A 1 | 80 | — | — | — | — | — | — | — | — |
| A 2 | — | 50 | — | — | — | — | — | — | — |
| A 3 | — | 30 | — | — | — | — | — | 30 | — |
| A 4 | — | — | 65 | — | — | — | — | — | — |
| A 5 | — | — | — | 86 | 84 | — | — | — | — |
| A 6 | — | — | — | — | — | 80 | — | — | — |
| A 7 | — | — | — | — | — | — | 80 | — | — |
| A 11 | — | — | — | — | — | — | — | 50 | — |
| A 12 | — | — | — | — | — | — | — | — | 86 |
| P 1 | 20 | 20 | — | — | — | — | 20 | 20 | — |
| P 2 | — | — | — | — | — | 20 | — | — | — |
| P 3 | — | — | — | 14 | — | — | — | — | 14 |
| P 4 | — | — | — | — | 16 | — | — | — | — |
| P 5 | — | — | 35 | — | — | — | — | — | — |

(Fortsetzung)

| Beispiel | 1 | 2 | 3 | 4 | 5 | 6 | 7 | 8 | 9 |
|---|---|---|---|---|---|---|---|---|---|
| PÄG-Gehalt % | 6,15 | 4,8 | 4,4 | 7,6 | 7,4 | 5,65 | 5,6 | 4,8 | 7,6 |
| Säurezahl mg KOH/g | 17,9 | 20,2 | 15,1 | 14,9 | 23,5 | 18,0 | 22,0 | 18,5 | 16,3 |
| Grenzviskositätszahl (Chloroform, 20 °C), ml/g | 9,65 | 9,5 | 10,3 | 10,1 | 10,4 | 9,7 | 10,6 | 9,5 | 9,9 |
| Trockenrückstand % | 85 | 85 | 90 | 90 | 90 | 85 | 85 | 85 | 90 |
| Konstanten der Emulsionen | | | | | | | | | |
| Trockenrückstand % | 40 | 44 | 42 | 43 | 42 | 45 | 45 | 45 | 43 |
| Viskosität Pa.s *) | 105 | 125 | 175 | 180 | 165 | 140 | 95 | 95 | 205 |
| pH-Wert | 9,5 | 9,3 | 8,9 | 9,3 | 8,8 | 9,4 | 9,5 | 9,6 | 9,6 |

*) Gemessen mit Brookfield-Rotationsviskosimeter RVF, Spindel 7, 4 U/min, 20 °C.

### Vergleichsbeispiel A, B und C

Um den Fortschritt gegenüber dem Stand der Technik nachzweisen, wurde um Vergleich je eine Emulsion gemäß EP-A-0 002 488, AT-PS 339 450 und DE-OS 24 16 658 hergestellt.

### Vergleichsbeispiel A :

Es wurde eine Emulsion gemäß EP-A-0 002 488, Beispiel 1, welche einen Trockenrückstand von 40 % und eine Viskosität von 205 Pa.s (Brookfield RVF, Sp. 7, 4 U/min, 20 °C) aufwies, hergestellt.

### Vergleichsbeispiel B :

Es wurde eine Emulsion nach Beispiel C2 der AT-PS 339 450 hergestellt. Der Trockenrückstand betrug 54 %, die Viskosität 100 Pa.s (Brookfield RVF, Sp. 7, 4 U/min, 20 °C).

### Vergleichsbeispiel C :

Es wurde eine Emulsion gemäß DE-OS 24 16 658, Beispiel 2, hergestellt. Abweichend von der Originalvorschrift wurde das Harz vor dem Emulgieren 90 %ig in Äthylenglykolmonobutyläther angelöst. Der Lösungsmittelzusatz dient der Erleichterung von Emulgierung und Lackherstellung und war erforderlich, um vergleichbare Bedingungen für alle Beispiele zu schaffen. Die Emulsion hatte einen Trockenrückstand von 51 % und eine Viskosität (Brookfield RVF, Sp. 7, 4 U/min. 20 °C) von 175 Pa.s.

### Prüfung der Lagerfähigkeit der Emulsionen :

Zur Verkürzung der Prüfzeit wurde die Lagerfähigkeit unter forcierten Bedingungen bei 80 °C geprüft. Das entspricht ungefähr der 500-fachen Beanspruchung einer Lagerung bei Normaltemperatur. Die Viskosität der Emulsionen wurde nach 8, 16, 24 und 32 Stunden Lagerung bei 80 °C geprüft.

Tabelle 6 : Änderung der Viskosität bei Lagerung bei 80 °C
Brookfield RVF, Sp. 7, 4 U/min, 20 °C, Pa.s.

| Beispiel | 1 | 2 | 3 | 4 | 5 | 6 | 7 | A | B | C |
|---|---|---|---|---|---|---|---|---|---|---|
| Ausgangswert | 105 | 125 | 175 | 180 | 165 | 140 | 95 | 205 | 100 | 175 |
| 8 Std./80 °C | 120 | 120 | 190 | 180 | 170 | 165 | 95 | 80 | 45 | 120 |
| 16 Std./80 °C | 120 | 105 | 205 | 195 | 160 | 145 | 90 | 55 | 20 | 70 |
| 24 Std./80 °C | 115 | 105 | 205 | 205 | 165 | 145 | 90 | 20 *) | **) | 45 *) |
| 32 Std./80 °C | 100 | 95 | 195 | 210 | 180 | 140 | 85 | | | 20 *) |

*) Flockige Ausscheidung.
**) Fester Bodensatz.

Prüfung von pigmentierten Lacken :

A) Luft- und forciert trocknende Lacke : Aus den Emulsionen entsprechend Beispiel 1, 2, 3, 6 und 7 sowie den Vergleichsbeispielen A und C werden Lacke hergestellt, welche in einem Pigment-Bindemitellverhältnis von 1 : 1 mit Titandioxid pigmentiert und mit 3 % (bezogen auf Festharz) eines wasserverträglichen Sikkativgemisches (enthaltend 1,2 % Co, 7,2 % Ba, 3,2 % Zn), 1 % eines Antihautmitells und 0,5 % eines Verlaufmittels versetzt werden. Die Lacke werden mit deionisiertem Wasser auf Applikationsviskosität verdünnt.

B) Ofentrocknende Lacke : Die Emulsion gemäß Beispiel 4, 5 und Vergleichsbeispiel B werden im Festharzverhältnis 70 : 30 mit einem handelsüblichen mittelreaktiven, wasserverdünnbaren Melaminharz kombiniert, im Pigment-Bindemittel-Verhältnis 0,8 : 1 mit Titandioxid pigmentiert und mit deionisiertem Wasser auf Applikationsviskosität eingestellt. Zur Verbesserung des Verlaufes wird ein handelsübliches Verlaufmittel auf Silikonbasis zugefügt.

Prüfung der Lagerfähigkeit : Im geschlossenen Gefäß bei 40 °C während 4 Wochen ; beurteilt wird die Veränderung der Viskosität (A), die Absetztendenz (B) und gegebenenfalls die Regenerierbarkeit (C).

Prüfung der Trocknungseigenschaften : 24 Stunden nach Herstellung der Lacke werden Filme entsprechend einer Trockenfilmstärke von 30 µm auf Glasstreifen aufgezogen und geprüft. (Trocknungsbedingungen : LT : Lufttrocknung bei 20 °C ; FT : Forcierte Trocknung 30 Minuten bei 100 °C nach 30 Minuten Ablüften ; OT : Ofentrocknung 30 Minuten 130 °C nach 30 Minuten Ablüften).

Prüfung der Wasserfestigkeit : Die Prüfung erfolgt 24 Stunden nach der Applikation der Lacke. (Luft- und forciert trocknende Lacke : 24-stündige Lagerung in Wasser bei 20 °C ; Ofentrocknende Lacke : 48-stündige Lagerung in Wasser bei 40 °C).

Erläuterung der Abkürzungen :

Lagerfähigkeit :
(A) Viskosität : VZ : Viskositätszunalme,
LVA : leichte Viskositätsabnahme
VA : Viskositätsabnahme

(B) Absetztendenz : LA : leichtes Absetzen
KG : koaguliert

(C) Regenerierbarkeit : REG : durch Zugabe von kleinen Mengen Wasser oder Triäthylamin normalisierbar, Bodensatz aufrührbar.
N. REG : nicht regenerierbar i. O : in Ordnung

Wasserfestigkeit ;
(A) Zustand unmittelbar nach dem Test : LE : leichte Erweichung
E : Erweichung
SE : starke Erweichung

(B) nach 8 Stunden : REG : regeneriert
RB : Runzelbildung
GM : Glanzminderung

(C) Blasengrad nach DIN 53 209

(Siehe Tabelle 7, Seite 12 f.)

Tabelle 7: Prüfung der Lacke

| | Lagerfähigkeit | | | Trocknung | | | Pendelhärte | | Wasserfestigkeit | | |
|---|---|---|---|---|---|---|---|---|---|---|---|
| Beispiel | (A) | (B) | (C) | Art der Tr. | klebfrei (h) | griffest (h) | DIN 53 154 nach 24 Std. | 1 Woche | (A) | (B) | (C) |
| 1 | i.O. | i.O. | — | LT | 2,5 | 8 | — | 41 | E | REG | m1/g1 |
| 2 | LVA | i.O. | — | LT | 1,5 | 6 | — | 65 | LE | REG | m0/g0 |
| 3 | I.O. | i.O. | — | LT | 3,0 | 8 | — | 50 | LE | REG | m0/g0 |
| 4 | VZ | i.O. | REG | OT | — | — | 119 | — | LE | REG | m0/g0 |
| 5 | VZ | i.O. | REG | OT | — | — | 143 | — | LE | REG | m0/g0 |
| 6 | i.O. | i.O. | — | FT | — | — | 45 | — | E | REG | m1/g2 |
| 7 | i.O. | i.O. | — | FT | — | — | 58 | — | E | REG | m0/g0 |
| A | VA | LA | REG | IT | 1,5 | 6 | — | 69 | LE | REG | m0/g0 |
| B | VA | KG | NREG | OT | — | — | 135 | — | LE | REG | m0/g0 |
| C | LVA | LA | REG | LT | 8 | > 24 | — | 35 | SE | RB | m1/g2 |
| | | | | | | | | | | GM | |

Die Prüfung der Emulsionen gemäß Beispiel 8 und 9 erfolgt im Vergleich zu den Beispielen 2 und 4 nach den dort beschriebenen Methoden. Es ergeben sich keine signifikanten Unterschiede in den Eigenschaften.

**Ansprüche**

1. Verfahren zur Herstellung verbesserter wäbriger Emulsionen für luft- und ofentrocknende Lacke auf der Basis von polyäthylenglykol-modifizierten Alkydharzen, dadurch gekennzeichnet, daß man

(a) Fettsäureester, deren gesättigte oder ungesättigte Fettsäurereste mehr als 10 C-Atome und ätherartig gebundene Polyäthylenglykolreste mit einem mittleren Molekulargewicht zwischen 500 und 5 000 aufweisen, wobei die verbleibende Hydroxylgruppe gegebenenfalls mit einem weiteren gesättigten Fettsäureester oder einem niedrigen Monoalkohol veräthert ist, in einer weiteren Verfahrensstufe

(b) unter Umesterung in üblicher Weise zu einem Alkyldharzvorprodukt mit einer Säurezahl unter 15, vorzugsweise unter 5 mg KOH/g, einer Hydroxylzahl zwischen 50 und 250 mg KOH/g und einem PÄG-Anteil von 3,3 bis 15 Gew.-% reagiert,

(c) 50 bis 90 Gew.-% dieses Alkydharzvorproduktes bei 170 bis 200 °C mit 10 bis 50 Gew.-% eines Copolymerisats aus

6-40 Gew.-% Methacrylsäure
20-55 Gew.-% einer ungesättigten Ölfettsäure mit einer Jodzahl von mind. 125 und
20-70 Gew.-% einer oder mehrerer Vinyl- und/oder Vinylidenverbindungen, welche neben der Doppelbindung keine weiteren reaktionsfähigen Gruppen tragen

bis zu einer Säurezahl von 10 bis 35, vorzugsweise 12-25 mg KOH/g und einer Grenzviskositätszahl (Chloroform, 20 °C) von 6 bis 15 ml/g bei einem PÄG-Anteil von 3-8% verestert und

(d) das so modifizierte Alkydharz unter Neutralisation der Carboxylgruppen mit Ammoniak oder Aminen und unter Zusatz von maximal 20 Gew.-% an organischen Hilfslösungsmitteln in Wasser emulgiert.

2. Verfahren nach Anspruch 1, dadurch gekennzeichnet, daß man als Komponente (a) ein in Gegenwart eines Katalysators bei 100-150 °C hergestelltes Umsetzungsprodukt aus 1 Mol eines Polyäthylenglykols mit einem mittleren Molekulargewicht zwischen 500 und 5 000 und 1,7 bis 2,1 Mol einer 1,2-Epoxidverbindung der allgemeinen Formel

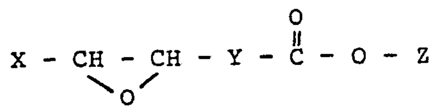

wobei
X einen Alkylrest mit 2 bis 8 C-Atomen,
Y einen Alkylenrest mit 7 bis 11 C-Atomen und
Z einen gesättigten aliphatischen, cycloaliphatischen oder einen aromatischen Kohlenwasserstoffrest mit 1-10 C-Atomen bedeutet und wobei das Umsetzungsprodukt eine Epoxidzahl unter 0,02, vorzugsweise unter 0,01 aufweist, einsetzt.

3. Verfahren nach Anspruch 2, dadurch gekennzeichnet, daß man als Epoxidverbindungen n- oder i-Alkanolester der Monoepoxidstearinsäure einsetzt.

4. Verfahren nach Anspruch 1, dadurch gekennzeichnet, daß man als Komponente (a) ein Umsetzungsprodukt aus einem epoxidierten Glyceridöl mit einem Epoxidsauerstoffgehalt von 4 bis 9 % und 0,8 bis 0,95 Mol pro verfügbarer Oxirangruppe eines Monoalkoxipolyäthylenglykols mit einem Molekulargewicht zwischen 500 und 3 000 einsetzt.

5. Verfahren nach Anspruch 4, dadurch gekennzeichnet, daß die Reaktionen zwischen dem epoxidierten Glyceridöl und dem Monoalkoxipolyäthylenglykol bis zur Umsetzung von mindestens 95 % der Hydroxylgruppen des Monoalkoxipolyäthylenglykols geführt wird.

6. Verfahren nach den Ansprüchen 1 bis 5, dadurch gekennzeichnet, daß man als Alkydharzvorprodukte gemäß (b) Fettsäureester von Epoxidharzen des Bisphenol A-Typs oder von Styrol-Allylalkohol-Copolymerisaten einsetzt.

7. Verfahren nach den Ansprüchen 1 bis 6, dadurch gekennzeichnet, daß man die Komponente (a) durch Umesterung in ein bereits vorgebildetes Alkydharzvorprodukt einbaut.

**Claims**

1. Process for producing improved aqueous emulsions for airdrying and stoving paints, based on polyethyleneglycol-modified alkyld resins, characterised in that

(a) fatty acid esters, the fatty acid radicals of which have more than 10 C-atoms and ether-like linked polyethyleneglycol radicals with an average molecular weight of between 500 and 5,000, whereby the remaining hydroxy group is optionally etherified with a further saturated fatty acid ester or a low monoalcohol, in a further reaction step are reacted

(b) with transesterification in knwon manner to form an alkyd resin intermediate with an acid value of below 15, preferably below 5 mg KOH/g, a hydroxyl value between 50 and 250 mg KOH/g and a PEG-portion of 3.3 to 15 % by weight,

(c) 50 to 90 % by weight of this alkyd resin intermediate are esterified at 170 to 200 °C with 10 to 50 % by weight of a copolymer of

6-40 % by weight methacrylic acid
20-55 % by weight unsaturated fatty acid with an iodine number of at least 125, and
20-70 % by weight of one or more vinyl and/or vinylidene compounds carrying no other functional groups besides the double bond,

to an acid value of 10 to 35, preferably 12 to 25 mg KOH/g and an intrinsic viscosity (chloroform, 20 °C) of 6 to 15 ml/g, with a PEG portion of 3 to 8 %, and

(d) the thus modified alkyd resin, with neutralisation of the carboxy groups with ammonia or amines, and with the addition of a maximum of 20 % by weight of organic auxiliary solvents, is emulsified in water.

2. Process according to claim 1, characterised in that as component (a) a product is used which is a reaction product produced in the presence of a catalyst, at 100 to 150 °C, from 1 mole of a polyethylene glycol with an average molecular weight of between 500 and 5,000 and 1.7 to 2.1 moles of a 1,2-epoxy compound of the general formula

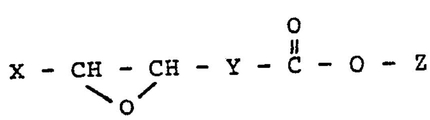

wherein
X is an alkyl radical with 2 to 8 C-atoms,
Y is a saturated aliphatic, cycloaliphatic or aromatic hydrocarbon radical with 1 to 10 C-atoms, the reaction product having an epoxy number of below 0.02, preferably below 0.01.

3. Process according to claim 2, characterised in that as epoxy compound, n- or i-alkanol esters of monoepoxy stearic acid are used.

4. Process according to claim 1, characterised in that as component (a) a reaction product is used of

an epoxidised glyceride oil with an epoxy oxygen content of 4 to 9 % and 0.8 to 0.95 moles per available oxirane group of a monoalkoxypolyethylene glycol with a molecular weight of between 500 and 3,000.

5. Process according to claim 4, characterised in that the reaction between the epoxidised glyceride oil and the monoalkoxypolyethylene glycol is carried to a reaction of at least 95 % of the hydroxy groups of the monoalkoxypolyethylene glycol.

6. Process according to claims 1 to 5, characterised in that as alkyd resin intermediates according to (b) fatty acid esters of epoxy resins of the bisphenol A type or of styrene-allyl alcohol copolymers are used.

7. Process according to claims 1 to 6, characterised in that component (a) is introduced into a preformed alkyd resin intermediate through reesterification.

**Revendications**

1. Procédé de préparation d'émulsions aqueuses perfectionnées pour peintures et vernis séchant à l'air et au four à base de résines alkydes modifiées par des polyéthylèneglycols, caractérisé en ce que :

(a) dans un stade opératoire subséquent, des esters d'acides gras dont les restes d'acides gras saturés ou insaturés contiennent plus de 10 atomes de carbone et portent des restes de polyéthylèneglycol d'un poids moléculaire moyen compris entre 500 et 5 000 fixés par éthérification, le groupe hydroxy résiduel du reste de polyéthylèneglycol étant éventuellement éthérifié par un autre ester d'acide gras saturé ou par un monoalcool inférieur, sont transformés,

(b) par transestérification effectuée de la manière habituelle en un produit préliminaire de résine alkyde présentant un indice d'acide inférieur à 15, de préférence inférieur à 5 mg de KOH/g, un indice d'hydroxyde de 50 à 250 mg de KOH/g et une proportion de PEG de 3,3 à 15 % en poids,

(c) 50 à 90 % en poids de ce produit préliminaire de résine alkyde étant estérifié à une température de 170 à 200 °C par 10 à 50 % en poids d'un copolymère de

6 à 40 % en poids d'acide méthacrylique,
20 à 55 % en poids d'un acide gras insaturé d'huile présentant un indice d'iode d'au moins 125 et
20 à 70 % en poids d'un ou plusieurs composés vinyliques et/ou vinylidéniques ne portant pas de groupe réactif autre que la double liaison,

jusqu'à un indice d'acide de 10 à 35, de préférence de 12 à 25 mg de KOH/g, et un indice de viscosité limite (chloroforme, 20 °C) de 6 à 15 ml/g, pour une teneur en PEG de 3 à 8 %, et

(d) la résine alkyde ainsi modifiée est émulsionnée dans l'eau avec neutralisation des groupes carboxyle par l'ammoniac ou des amines et avec adjonction d'un maximum de 20 % en poids de solvants auxiliaires organiques.

2. Procédé selon la revendication 1, caractérisé en ce que l'on utilise en tant que composant (a) un produit de réaction, préparé en présence d'un catalyseur à une température de 100 à 150 °C, d'1 mole d'un polyéthylèneglycol de poids moléculaire moyen de 500 à 5 000, et de 1,7 à 2,1 moles d'un composé 1,2-époxydique de formule générale :

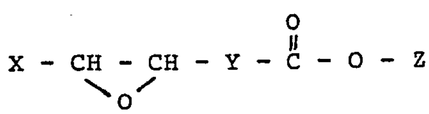

dans laquelle

X représente un groupe alkyle en C2-C8,
Y représente un groupe alkylène en C7-C11 et
Z représente un reste hydrocarboné aliphatique ou cycloaliphatique saturé ou un reste hydrocarboné aromatique en C1-C10, le produit de réaction présentant un indice d'époxyde inférieur à 0,02 et de préférence inférieur à 0,01.

3. Procédé selon la revendication 2, caractérisé en ce que l'on utilise en tant que composés époxydiques des esters de n- ou i-alcanols de l'acide monoépoxystéarique.

4. Procédé selon la revendication 1, caractérisé en ce que l'on utilise en tant que composant (a) un produit de réaction d'une huile glycéridique époxydée, à une teneur en oxygène d'époxyde de 4 à 9 %, et 0,8 à 0,95 mole, par groupe oxiranne disponible, d'un mono-alcoxypolyéthylèneglycol de poids moléculaire compris entre 500 et 3 000.

5. Procédé selon la revendication 4, caractérisé en ce que les réactions entre l'huile glycéridique époxydée et le monoalcoxypolyéthylèneglycol sont poursuivies jusqu'à conversion d'au moins 95 % des groupes hydroxy du monoalcoxypolyéthylèneglycol.

6. Procédé selon les revendications 1 à 5, caractérisé en ce que l'on utilise en tant que produits préliminaires de résines alkydes (b) des esters d'acides gras de résines époxydiques du type du bisphénol A ou de copolymères styrène-alcool allylique.

7. Procédé selon les revendications 1 à 6, caractérisé en ce que l'on incorpore le composant (a) par transestérification dans un produit préliminaire de résine alkyde formé au préalable.